# EUROPEAN PATENT APPLICATION

(11) **EP 2 413 216 A1**
(43) Date of publication of application: **01.02.2012**
(21) Application number: 10171351.9
(22) Date of filing: 30.07.2010
(51) Int. Cl.: G06F 1/16, H04M 1/23, H04M 1/725

(54) **Portable electronic device having tabletop mode**

(71) Applicant: Research in Motion Limited, Waterloo, Ontario N2L 3W8 (CA)
(72) Inventor: Ladouceur, Norman Miner, Waterloo Ontario N2L 3W8 (CA); Griffin, Jason Tyler, Waterloo Ontario N2L 3W8 (CA)
(74) Representative: Patel, Binesh

(57) **Abstract**

A portable electronic device for facilitating user input, the portable electronic device having a display screen on a front face thereof, a side edge substantially orthogonal to the front face, and a side input button located on the side edge having an associated input function. When a predetermined trigger condition is detected, a user input interface accessible on the front face of the device is enabled to provide the input function associated with the side input button.

## Description

### FIELD OF TECHNOLOGY

The present disclosure relates to portable electronic devices.

### BACKGROUND

Mobile electronic devices, including handheld electronic communication devices, have gained widespread use and may provide a variety of functions including, for example, telephonic, electronic text messaging, personal information manager (PIM) application functions, mobile web browsing, and audio and video playback, among other things. Such devices are frequently intended for handheld use and ease of portability. In certain environments, it is desirable to use a mobile device without the user having to physically hold the device, such as when the mobile device is laying on a flat surface or in a cradle.

### SUMMARY

According to one example is a method implemented on a portable electronic device for facilitating user input, the portable electronic device having a display screen on a front face thereof, a side edge substantially orthogonal to the front face, and a side input button located on the side edge having an associated input function. The method includes: monitoring for a predetermined trigger condition; and upon detecting the predetermined trigger condition, enabling a user input interface accessible on the front face of the device to provide the input function associated with the side input button.

According to one example there is provided a portable electronic device that has a housing having a display screen on a front face thereof and a side edge substantially orthogonal to the front face. A side input button is located on the side edge and having an associated input function. The device includes a processor operatively coupled to the display screen and the side input button, the processor being configured for: monitoring for a predetermined trigger condition; and upon detecting the predetermined trigger condition, enabling a user input interface accessible on the front face of the device to provide the input function associated with the side input button.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a handheld electronic communication device according to an example embodiment;

Figure 2 is a front view of an example of a portable electronic device in a vertical, portrait orientation;

Figure 3A is a side view of the portable electronic device of Figure 2 in a vertical, portrait orientation;

Figure 3B is a side view of the portable electronic device of Figure 2 in a inclined, portrait orientation;

Figure 3C is a side view of the portable electronic device of Figure 2 in a horizontal, portrait orientation;

Figure 3D is a bottom end view of the portable electronic device of Figure 2 in a horizontal, portrait orientation;

Figure 4 is a front view of the portable electronic device of Figure 2 in a horizontal, portrait orientation;

Figure 5 is a front view of the portable electronic device of Figure 2 in a horizontal, landscape orientation;

Figure 6 is a flow chart of example actions performed on the portable electronic device of Figure 1; and

Figure 7 is a front view of a further example of a portable electronic device in a vertical, portrait orientation.

### DETAILED DESCRIPTION

For simplicity and clarity of illustration, reference numerals may be repeated among the figures to indicate corresponding or analogous elements. Numerous details are set forth to provide an understanding of the example embodiments described herein. The embodiments may be practiced without these details. In other instances, well-known methods, procedures, and components have not been described in detail to avoid obscuring the example embodiments described. The description is not to be considered as limited to the scope of the example embodiments described herein.

The disclosure generally relates to an electronic device, which is a portable electronic device in the examples described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

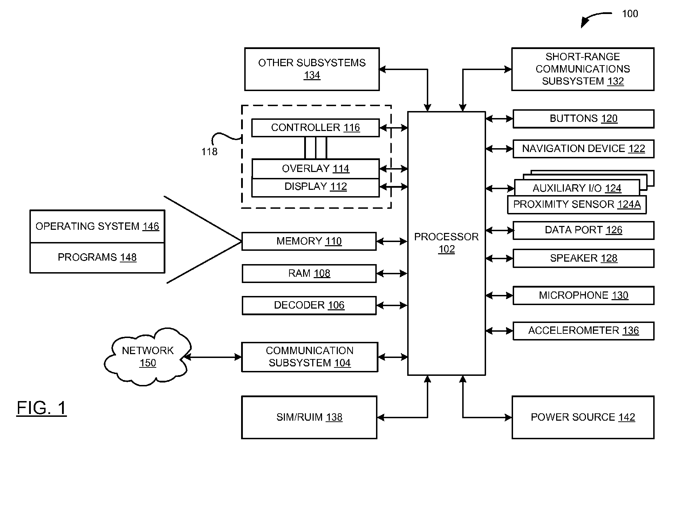

A block diagram of an example of a portable electronic device 100 is shown in Figure 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display screen 112 (such as a liquid crystal display (LCD)) with a touch-sensitive overlay 114 operably connected to an electronic controller 116 that together comprise a touch-sensitive display 118, one or more keys or buttons 120, a navigation device 122, one or more auxiliary input/output (I/O) subsystems 124, a data port 126, a speaker 128, a microphone 130, short-range communications subsystem 132, and other device subsystems 134. User-interaction with a graphical user interface (GUI) is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 interacts with an attitude sensor such as an accelerometer 136 that may be utilized to detect direction of gravitational forces or gravity-induced reaction forces.

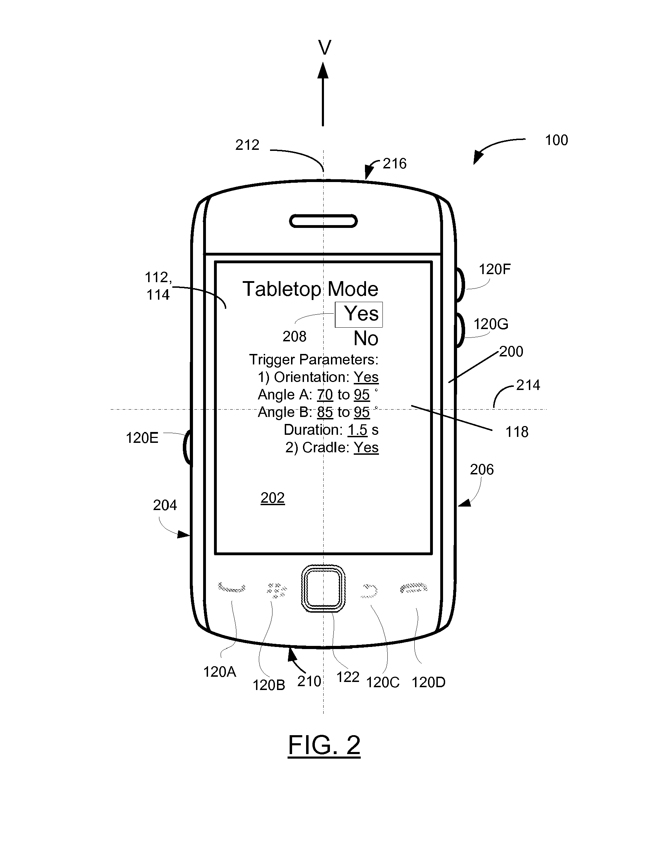

The navigation device 122 may be a depressible (or clickable) joystick such as a depressible optical joystick, a depressible trackball, a depressible scroll wheel, or a depressible touch-sensitive trackpad or touchpad. Figure 2 shows a mobile electronic device 100 having a navigation device 122 in the form of a depressible optical joystick. The auxiliary I/O subsystems 124 may include other input devices such as a keyboard or keypad.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software applications or programs 148 that are executed by the processor 102 and are typically stored in a persistent, updatable store such as the memory 110. Additional applications or programs 148 may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display screen 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

Figure 2 shows a front view of an example of a portable electronic device 100 in a vertical, portrait orientation. The portable electronic device 100 of Figure 2 is configured for use as a handheld device and includes a housing 200 that houses internal components including internal components shown in Figure 1 and frames the touch-sensitive display 118 such that the touch-sensitive display 118 is exposed on a front face 202 of the portable electronic device for user-interaction therewith when the portable electronic device 100 is in use. It will be appreciated that the touch-sensitive display 118 may include any suitable number of user-selectable features rendered thereon, for example, in the form of virtual or soft buttons for user-selection of, for example, applications, options, or keys of a keyboard for user entry of data during operation of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

In one example, as shown in Figure 2, buttons 120 include buttons represented individually by references 120A, 120B, 120C, 120D, 120E, 120F and 120G. Buttons 120A, 120B, 120C and 120D are front buttons located below the touch-sensitive display 118 on the front face 202 of the portable electronic device 100. Buttons 120E, 120F and 120G are side buttons located on side edges of the portable electronic device 100 - in one example, button 120E is located on a left side edge 204 of the portable electronic device 100, and buttons 120F and 120G are located on a right side edge 206 of the portable electronic device 100. The side edges 204, 206 of the device are substantially orthogonal to the front face 202. More or fewer buttons 120 can be provided on the front face and side edges and in different locations than illustrated in Figure 2. The buttons 120 generate corresponding input signals when activated. The buttons 120 may be constructed using any suitable button (or key) construction such as, for example, a dome-switch construction. The front buttons 120A, 120B, 120C and 120D are activated by applying pressure (for example, by a user's fingertip) towards the front face 202 of the portable electronic device 100. The side buttons 120E, 120F, 120G are activated by applying pressure (for example, by a user's fingertip) towards the side edges of the portable electronic device 100.

In some examples, the actions performed by the device 100 in response to activation of respective buttons 120 are context-sensitive. The action performed depends on a context that the button was activated. The context may be, but is not limited to, a device state, application, screen context, selected item or function, or any combination thereof. The front buttons 120A, 120B, 120C and 120D, in the shown example, are an answer (or send) button 120A, menu button 120B, escape (or back) button 120C, and a hang up (or end) button 120D. The send/answer button 120A may be used for answering an incoming voice call, invoking a menu for a phone application when there is no voice call in progress, or initiating an outbound voice phone call from the phone application when a phone number is selected in the phone application. The menu button 120B may be used to invoke a context-sensitive menu comprising context-sensitive menu options. The escape/back button 120C may be used to cancel a current action, reverses (e.g., "back up" or "go back") through previous user interface screens or menus displayed on the touch-sensitive display 118, or exit the current application or program 148. The end/hang up button 120D may be used to end a voice call in progress or hide the current application 148.

In one example, the left side button 120E is configured in some contexts to activate a "voice input" function on the device 100 in which voice inputs are converted to text - for example a voice dialing function or a voice command entry function. In some examples, left side button 120E is configured to operate in some contexts as a "push-to-talk" key for device to device communications. In some examples, side buttons 120F and 120G are configured as volume control buttons for the device - for example activating upper side button 120F raises an output volume, and activating lower side button 120G lowers an output volume. Visual feedback, for example volume bars, may be provided on display 118 to indicate a relative volume setting when buttons 120F or 120G are activated. Other side buttons may be provided on the top, bottom, right or left side edges of the device housing 200 such as, for example, a camera button for opening and operating a camera function.

In examples described herein, the portable electronic device 100 is configurable to operate in a "tabletop mode" in which user input functionality that is normally provided by one or more of the side buttons 120E, 120F and 120G is temporarily mapped to user input interfaces that are accessible from the front face 202 of the portable electronic device 100 on the occurrence of one or more predetermined trigger conditions. By way of example, the trigger conditions that cause the portable electronic device 100 to operate in tabletop mode could occur when the device 100 is substantially stationary with its front face 202 facing in a generally upwards or vertical direction such as when the device 100 is resting on a horizontal support surface or in a cradle. In some situations, side buttons 120E, 120F and 120G may be difficult to activate when the device 100 is resting on a support surface or held in a cradle, and providing alternative user input interfaces that can be accessed on the front face of the device may enhance the user experience and assist in the usability of the device 100, particularly for users who have limited or impaired control of their hands.

In at least some examples the tabletop functionality described herein is implemented by computer code that is part of the operating system 146 or one or more programs 148. Such computer code is executed by processor 102 to cause the systems and subsystems of the portable electronic device 100 to operate in the manner described below.

In some examples, a configurable user profile option is provided on the portable device 100 to enable or disable the operation of the tabletop mode on the device. By way of example, Figure 2 illustrates an example of a user profile option interface displayed on screen 118 in which a user is presented with "Yes" or "No" options to enable tabletop mode. In the illustrated example, the "Yes" option is shown as highlighted by an on-screen selection indicator 208. The "Yes" or "No" options could for example be selectable by touching screen 118 at the appropriate location or using navigation device 122 to select one of the two options. The selected option would then be saved as a user profile. In some examples the electronic device 100 may be configured to operate in tabletop mode by default. The following describes the operation of the portable electronic device 100 when operation of the device 100 in tabletop mode is enabled.

In the example of Figure 2, the front face 202 of the portable electronic device is substantially rectangular, having a longitudinal or major axis as indicated by dashed line 212 that extends from a top side edge 216 to a bottom side edge 210, and a minor axis 214 as indicated by dashed line 214 that extends from left side edge 204 to right side edge 206. The major axis 212 and minor axis 214 are perpendicular to each other and substantially parallel to the display screen 118 that is provided on the front face 202 of the electronic device 100.

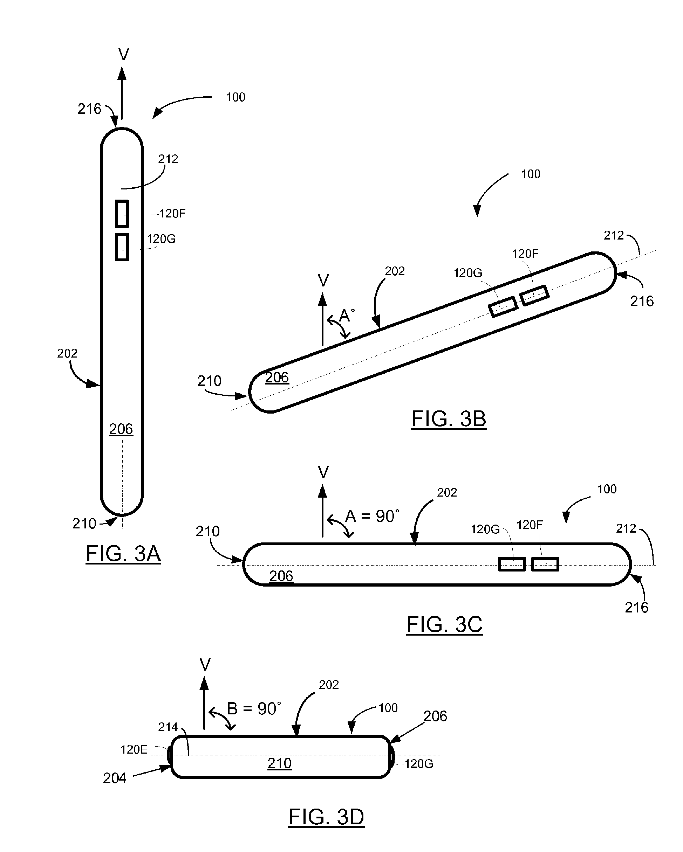

In order to explain an example operation of portable electronic device 100 when tabletop mode is enabled, various viewing orientations of the device 100 will be described. In Figure 2, a vertical reference axis is represented by line "V", and the electronic device 100 is illustrated in an upright or vertical viewing position with its major axis 212 being parallel to vertical V. Figures 3A to 3C show right side views of the electronic device 100 as it moves from a vertical orientation to a horizontal orientation. In particular, similar to Figure 2, Figure 3A shows a right side view of the electronic device 100 in a vertical viewing orientation. Figure 3B shows a right side view of the electronic device 100 in an inclined viewing orientation with the front face 202 of the device 100 and its major axis 212 being rotated an acute angle A° relative to vertical V. Figure 3C shows a right side view of the electronic device 100 in a horizontal viewing position, with the front face 202 of the device 202 facing directly vertically (with the device major axis 212 being positioned at A=90° relative to vertical V). Figure 3D shows the bottom side edge 210 of the portable electronic device 100 in a horizontal viewing position, with the front face 202 of the device 100 facing vertically. In each of the Figures 3A to 3D, the device minor axis 214 is substantially perpendicular to vertical V, as illustrated in Figure 3D by angle B.

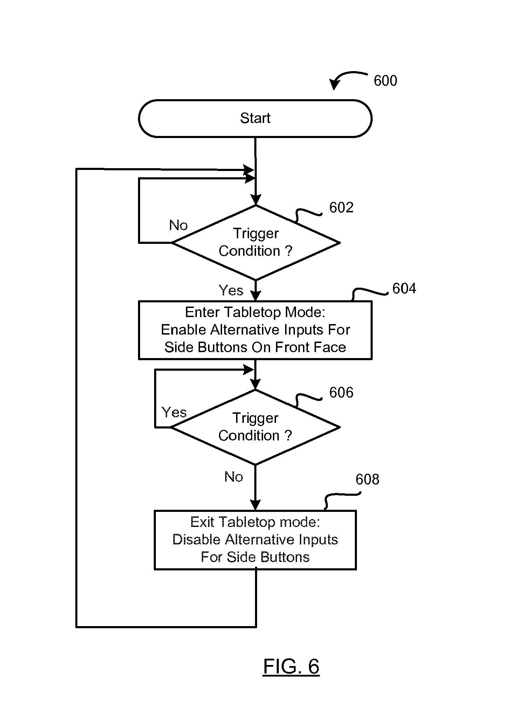

In an example embodiment, upon the occurrence of predetermined trigger conditions, the portable electronic device 100 automatically implements a tabletop mode in which alternative input options accessible from the front face 202 of the device 100 are provided for at least some of the side buttons 120F, 120G and 120E. In this regard, referring to action set 600 in Figure 6, in one example, the processor 102 is configured to monitor for the occurrence of one or more predetermined trigger conditions (Action 602). In one example, the trigger condition depends on the orientation of electronic device 100. Based on orientation information received from accelerometer 136, the processor is configured to determine when the portable electronic device 100 meets a predetermined orientation threshold that indicates a trigger condition that the device should operate in a tabletop mode. The orientation threshold could include one or more threshold parameters. For example, the processor 102 could be configured to trigger tabletop mode when the angles A and B (Figures 3A-3D) each fall within a respective predetermined threshold range for a predetermined time duration. By way of non-limiting example, the processor could be configured to determine when a duration D of more than three seconds passes while: (i) the angle A between major axis 212 and the vertical V is in the range of 85 to 95 degrees and (ii) the angle B between minor axis 214 and the vertical V is in the range of 85 to 95 degrees, then the orientation threshold to trigger tabletop viewing mode has been met. In one example embodiment, the threshold ranges for one or more of angle A, angle B and a threshold duration D are stored in memory 110 and may be user configurable - for example, as shown in Figure 2 orientation threshold parameters may be user definable in the user profile setup interface screen that allows the tabletop mode to be enabled and disabled. In the non-limiting user profile example illustrated on screen 118 in Figure 2, the threshold range for angle A is set at 70 to 95 degrees, the threshold range for angle B is set at 85 to 95 degrees and the threshold for duration D is greater than 1.5 seconds.

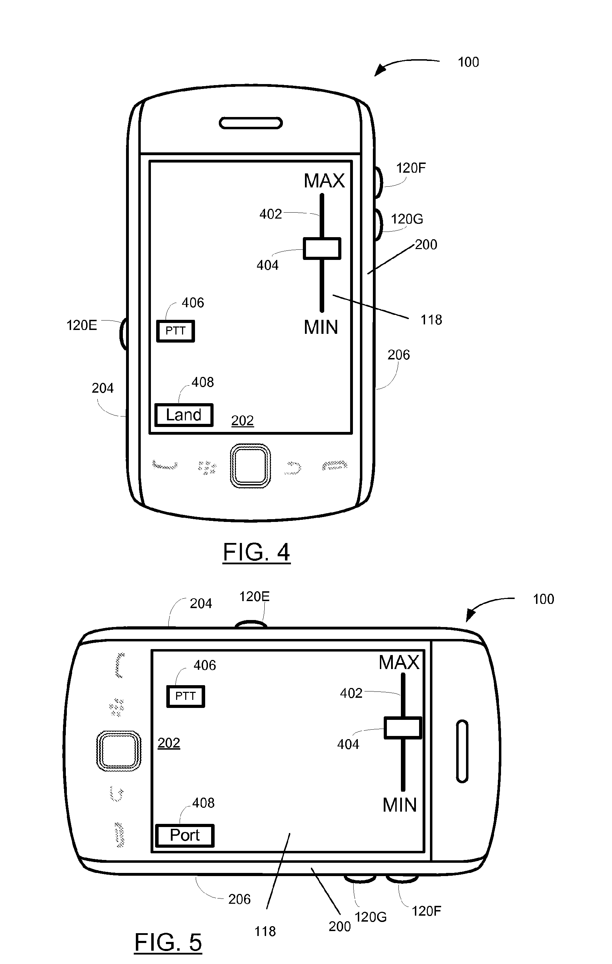

As indicated in Figure 6, when the trigger condition for triggering tabletop mode is detected, alternative inputs on the front face 202 of the portable electronic device 100 are enabled for side buttons 120E, 120F and 120G (Action 604). In this regard, Figure 4 shows a front view of the portable electronic device 100 in a horizontal viewing position, such as may be the case if the device 100 was resting face up on a horizontal support surface with its front face 102 facing substantially vertical - in Figure 4, the vertical V (not shown) is coming directly out of the image, and angles A and B are each 90 degrees. In the example shown in Figure 4, the processer 102, in response to the placement of the device 100 in a horizontal viewing orientation, has caused a user selectable input element in the form of virtual volume slider bar 402 to be temporarily displayed on touch screen 118. The volume slider bar 402 includes a virtual slider button 404 that can be dragged up and down slider bar 402 in response to a user's touch in order to adjust an output volume of the portable electronic device 100. Accordingly, the volume slider bar 402 provides the same functionality as volume up side button 120F and volume down side button 120G. Thus, the volume slider bar 402 provides an alternative user input interface for side buttons 120F and 120G that is directly accessible on the front face 202 of the device 100. In some examples, the presentation of the volume slider bar 402 is context dependent in that in Action 604, the processor 102 will cause the volume slider bar 402 to be displayed on screen 118 only if an application or program currently being executed requires volume control. For example, if the electronic device 100 is in a phone call session or being used as a media player when in tabletop mode, then the volume slider bar 402 is displayed - however, if during the time the electronic device 100 is in tabletop mode none of the programs currently executing on the device require volume control, then the volume slider bar 402 will not be displayed.

In the example shown in Figure 4, as part of Action 604 implemented in response to the placement of the device 100 in a horizontal viewing orientation, the processor also causes a user selectable input element in the form of virtual or soft key 406 to be temporarily displayed on touch screen 118 while the device 100 is in tabletop mode. The soft key 406 can be activated by a user touch of the key's display location on screen 118, and provides the same input functionality as side button 120E. For example, where activation of side button 102E is a hot key for voice activation that enables voice input of commands to a speech-to-text application on the device, activation of soft key 406 has the same effect in tabletop mode. Similarly, where side button 102E is enabled as a "push-to-talk" button for a peer-to-peer communications application on the device 100, the soft key 406 also provides push-to-talk functionality. As noted above, in some examples side buttons such as side button 102E may be user programmable, in which case soft key 406 will be associated with whatever input function the side button 102E is currently programmed to implement.

In some examples, one or more of the side input buttons 120E, 120F and 120G may be temporarily disabled when their front face alternative input interfaces 402, 406 are operational during tabletop mode, however in some embodiments both the front face input interfaces and side buttons remain operational in tabletop mode.

Portable electronic devices are commonly configured to switch, depending on device orientation, between a portrait display mode in which a vertical axis of a displayed image is parallel to the major axis of the device display screen, and a landscape display mode in which the vertical axis of the displayed image is parallel to a minor axis of the device display screen. Figures 2 and 4 both show a portrait-oriented image display on the portable electronic device 100. However, when portable electronic device 100 is in a horizontal viewing orientation with its front face 202 facing in a vertical direction, the relative orientation of the device to the user in terms of portrait or landscape viewing is not readily determined. Accordingly, in one example, as part of Action 604, the processor 102 is configured to display as one of the temporary tabletop mode user input interfaces a touch-selectable soft key 408 on the screen 118 that allows a user to toggle between a portrait display mode and a landscape display mode. In this regard, in Figure 4, the soft key 408 is labeled "Land" to indicate that user selection of the key 408 will toggle to a landscape display mode as shown in Figure 5. In Figure 5, the soft key 408 is labeled "Port" to indicate that user selection of the key 408 will toggle to a portrait display mode as shown in Figure 4.

In some example embodiments, one or more of the front face input interfaces 402, 406, 408 are only displayed for a time limited duration after the electronic device 100 enters tabletop mode. In some embodiments, such time duration is configurable as part of the user profile for the device 100.

As indicated in Action 606 in Figure 6, after the portable electronic device 100 enters tabletop mode, the processor 102 subsequently monitors for the occurrence of one or more trigger conditions to exit tabletop mode. The trigger conditions that would cause the device 100 to exit tabletop mode could be the removal of the same trigger conditions that caused the device to enter tabletop mode. For example, the processor 102 can monitor device orientation information from accelerometer 136 to determine when the device orientation falls outside of the orientation threshold that was previously used as a trigger in Action 602, and exit tabletop mode at that time. As indicated in Action 608, the processor 102 disables the alternative user input interfaces that were provided on entering tabletop mode - in the example of Figures 4 and 5, virtual slider bar 402 and soft keys 406 and 408 are removed from the screen 118 once the monitored device orientation indicates the device is no longer in a stationary, horizontal viewing orientation. In some examples, the orientation threshold used in Action 602 to trigger entry into tabletop mode can be different than the orientation threshold used to trigger exit from tabletop mode in Action 602.

As suggested above, in various examples the orientation threshold used in Action 602 to trigger tabletop mode can be broader than just a straight face up horizontal orientation of the portable electronic device 100 on a horizontal support surface. By way of example, the orientation threshold used in Action 602 could be configured to cause tabletop mode to be automatically triggered when the portable electronic device remains in at least a predetermined inclination from the vertical V without being completely horizontal, such as shown in Figure 3B. Portable electronic device 100 may be maintained in an inclined state such as shown in Figure 3B if it is resting on an inclined support surface or secured in a cradle for viewing, for example.

In some examples, positional information other than or in addition to information from accelerometer 136 can be used by the processor 102 as trigger conditions for entering or exiting tabletop mode. By way of example, auxiliary I/O systems 124 may include a proximity sensor 124A such as a Hall Effect sensor or physical switch for detecting when the portable electronic device 100 is mounted to a cradle that supports the portable electronic device 100 in a viewing position, and such information used to indicate a trigger condition in Action 602 for entering tabletop mode. In some examples, alternative trigger conditions can be used to trigger entry into tabletop mode - for example, if the device orientations falls within a predetermined orientation threshold or the electronic device 100 is mounted to a cradle, then tabletop mode is entered. In some examples the alternative trigger conditions can be user defined - in the user profile screen on Figure 2, the user is presented with a yes or no option for identifying a "cradle" condition as being a trigger condition in addition to the various orientation parameters.

In some examples, the trigger condition for entering tabletop mode can be a predetermined user input such that the user manually triggers tabletop mode rather than having tabletop mode automatically triggered based on device orientation or proximity to a cradle - for example activating a certain button 120 or combination of buttons 120 could act as a trigger condition for entering and exiting tabletop mode in some example configurations.

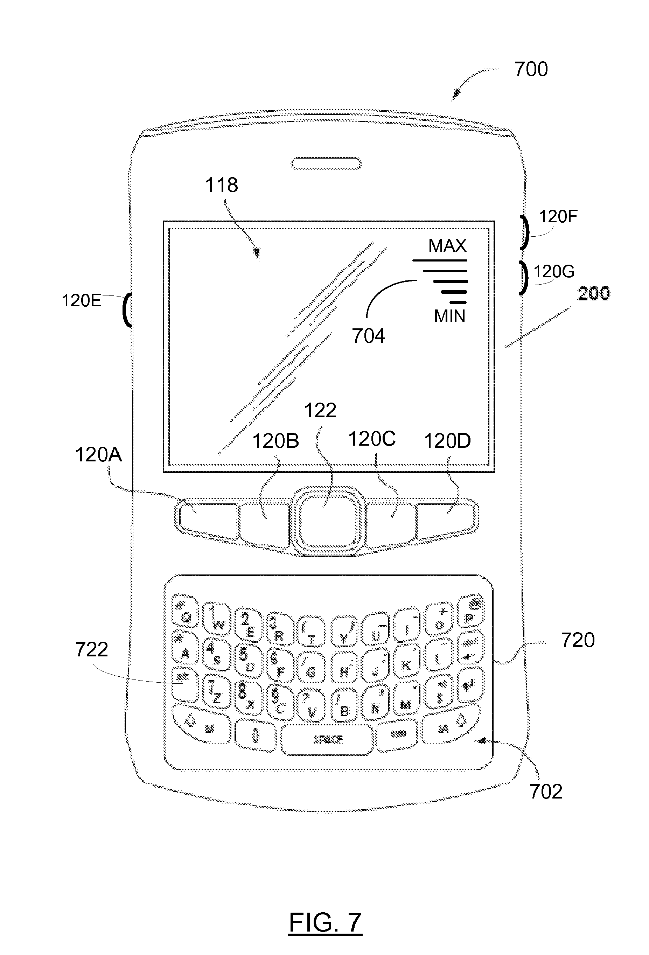

Figure 7 illustrates a further example of a handheld portable electronic device 700 to which the features described herein can be applied. With the exception of differences that will be apparent from the Figures and the following description, the portable electronic device 700 is substantially identical in construction and operation to device 100 with the exception that the buttons 120 of device 700 includes an array of buttons 720 arranged to provide a keyboard on the front face 702 of the device, including for example a plurality of alphanumeric input keys and control keys such as alt button 722. In some examples the display screen 118 of the device 700 is a non-touch screen display.

As with device 100, device 700 is configured to, on the occurrence of one or more predetermined trigger conditions, operate in a tabletop mode in which the functionality of one or more of the side buttons 120E, 120F and 120G is temporarily mapped to a user input interface accessible on the front face 702 of the device 700. The trigger conditions can be the same as those described above, such as for example, orientation in a predetermined position for a predetermined duration, mounting in a cradle, or a predetermined user input entry through one or more buttons 120. However, in configurations where the screen 118 is not a touch screen, the user input interface mapping that occurs in tabletop mode is implemented by temporarily associating the functions associated with side buttons 120E, 120F and 120G to hard buttons 120 that are located on the front face 702 of the portable electronic device 700. In some examples, as front face buttons 120 typically already have assigned functions, associating the functions associated with side buttons 120E, 120F and 120G to hard buttons 120 will require that some front face buttons 120 be assigned multiple input functions and a further button be used to control the specific input function that is triggered when a button is activated.

For example, in one implementation when in tabletop mode the button 120C may be mapped to perform its normal input function as an escape/back button when pressed on its own, but also be mapped to act as the volume-up input button (i.e. the input functional normally assigned to side button 120F) when pressed in combination with alt button 722. Similarly, in tabletop mode the button 120D may be mapped to perform its normal input function as an end/hangup button when pressed on its own, but also be mapped to act as the volume-down input button (i.e. the input functional normally assigned to side button 120G) when pressed in combination with alt button 722. In such a configuration activating buttons 120C and 120D in combination with the alt button 722 on the front face 702 of the device allows a user to control the volume output by the device 700. In some examples, visual feedback may be provided in the form of a volume level indicator 704 displayed on the screen 118. In some examples, the input functionality assigned to voice input/push-to-talk button 120E is mapped to answer/send button 120A such that pressing answer/send button 120A in combination with the alt button 722 provides the same input functionality as activating side button 120E. As per Actions 606 and 608, the temporary assignment of side button input functions to front buttons 120A, 120C and 120D is disabled once the portable electronic device 700 detects conditions triggering an exit from tabletop mode.

Accordingly, examples described herein provide a portable electronic device in which input functionality that is normally assigned to buttons located on the side edges of the electronic device is assigned to one or more user input interfaces that are accessible from the front face of the portable electronic device on the occurrence of one or more predetermined trigger conditions. By way of example, in various implementations the trigger conditions could include, among other things, one or more of a predetermined orientation of the portable electronic device, proximity of the electronic device to a mounting cradle, or a predetermined user input. In some situations, the side buttons may be difficult to activate when the device 100 is in certain positions such as resting on a support surface or held in a cradle, and providing alternative user input interfaces that can be accessed on the front face of the device may enhance the user experience and assist in the usability of the device 100, particularly for users who have limited or impaired control of their hands.

While the present disclosure is described primarily in terms of methods, the present disclosure is also directed to a portable electronic device configured to perform at least part of the methods. The portable electronic device may be configured using hardware modules, software modules, a combination of hardware and software modules, or any other suitable manner. The present disclosure is also directed to a pre-recorded storage device or computer-readable medium having computer-readable code stored thereon, the computer-readable code being executable by at least one processor of the portable electronic device for performing at least parts of the described methods.

The present disclosure may be embodied in other specific forms without departing from its spirit or essential characteristics. The described embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method implemented on a portable electronic device (100) for facilitating user input, the portable electronic device having a display screen (118) on a front face (202) thereof, a side edge (204, 206) substantially orthogonal to the front face (202), and a side input button (120E, 120F, 120G) located on the side edge (204, 206) having an associated input function, the method comprising:
monitoring for a predetermined trigger condition; and
upon detecting the predetermined trigger condition, enabling a user input interface (114) accessible on the front face of the device to provide the input function associated with the side input button (120E, 120F, 120G).

2. The method of claim 1 wherein the portable electronic device includes an orientation sensor (136) for sensing an orientation of the device relative to vertical, and wherein detecting the predetermined trigger condition comprises detecting, at least partially in dependence on information from the orientation sensor, when the portable electronic device meets a predetermined orientation threshold.

3. The method of claim 2 wherein the orientation threshold is indicative of the portable electronic device being located in a stationary position for a threshold time duration with the front face of the electronic device facing substantially vertical.

4. The method of claim 2 comprising:
receiving and storing at a memory of the portable electronic device user inputted parameters defining the orientation threshold.

5. The method of any one of claims 1 to 4 wherein the portable electronic device includes a proximity sensor for sensing when the portable electronic device is mounted to a cradle, and wherein detecting a predetermined trigger condition comprises detecting, at least partially in dependence in information from the proximity sensor, when the portable electronic device is mounted to the cradle.

6. The method of any one of claims 1 to 5 wherein detecting a predetermined trigger condition comprises detecting when a predetermined user input is made to the portable electronic device.

7. The method of any one of claims 1 to 6 wherein the display screen comprises a touch-sensitive display screen, wherein enabling a user input interface accessible on the front face of the device comprises displaying a user selectable input element on the touch-sensitive display screen providing the input function associated with the side input button.

8. The method of claim 7 wherein the input function associated with the side input button is a volume control function, and the user selectable input element comprises a virtual slider bar operative to control an output volume of the portable electronic device.

9. The method of claim 7 wherein the input function associated with the side input button is a user programmable function input, and the user selectable input element comprises a soft button.

10. The method of any one of claims 7, 8 or 9 comprising, upon detecting the predetermined trigger condition, displaying on the touch-sensitive display screen a user selectable button for toggling between a portrait display orientation and a landscape display orientation on the display screen.

11. The method of any one of claims 1 to 6 wherein the portable electronic device comprises a plurality of physical input buttons located on the front face thereof, wherein enabling a user input interface accessible on the front face of the device comprises temporarily mapping the input function of the side input button to one or more of the input buttons located on the front face.

12. A computer readable medium comprising computer readable code for execution by a processor of a portable electronic device having a display screen on a front face thereof, a side edge substantially orthogonal to the front face, and a side input button located on the side edge having an associated input function, the computer readable code enabling the processor to:
monitor for a predetermined trigger condition; and
upon detecting the predetermined trigger condition, enable a user input interface accessible on the front face of the device to provide the input function associated with the side input button.

13. A computer readable medium comprising computer readable code for execution by a processor of a portable electronic device, the computer readable code enabling the portable electronic device to perform the method of any one of claims 1 to 11.

14. A portable electronic device comprising:
a housing (200) having a display screen (118) on a front face (202) thereof, and a side edge (204, 206) substantially orthogonal to the front face (202);
a side input button (120E, 120F, 120G) located on the side edge and having an associated input function;
a processor (102) operatively coupled to the display screen and the side input button, the processor being configured for:
monitoring for a predetermined trigger condition; and
upon detecting the predetermined trigger condition, enabling a user input interface accessible on the front face of the device to provide the input function associated with the side input button.

15. A portable electronic device comprising:
a housing (200) having a display screen (118) on a front face (202) thereof, and a side edge (204, 206) substantially orthogonal to the front face (202);
a side input button (120E, 120F, 120G) located on the side edge and having an associated input function;
a processor (102) operatively coupled to the display screen and the side input button, the processor being configured for performing the method of any one of claims 1 to 11.

## Amended claims

### Amended claims in accordance with Rule 137(2) EPC.

**1.** A method implemented on a portable electronic device (100) for facilitating user input, the portable electronic device having a display screen (118) on a front face (202) thereof, a side edge (204, 206) substantially orthogonal to the front face (202), a side input button (120E, 120F, 120G) located on the side edge (204, 206) having an associated input function, and an orientation sensor (136) for sensing an orientation of the device relative to vertical, the method comprising:
monitoring for a predetermined trigger condition; and
upon detecting the predetermined trigger condition, enabling a user input interface (114) accessible on the front face (202) of the device to provide the input function associated with the side input button (120E, 120F, 120G);
wherein detecting the predetermined trigger condition comprises detecting, at least partially in dependence on information from the orientation sensor (136), when the portable electronic device meets a predetermined orientation threshold.

**2.** The method of claim 1 wherein the orientation threshold is indicative of the portable electronic device (100) being located in a stationary position for a threshold time duration with the front face (202) of the electronic device facing substantially vertical.

**3.** The method of claim 1 comprising:
receiving and storing at a memory of the portable electronic (100) device user inputted parameters defining the orientation threshold.

**4.** The method of any one of claims 1 to 3 wherein the portable electronic device (100) includes a proximity sensor (124A) for sensing when the portable electronic device (100) is mounted to a cradle, and wherein detecting a predetermined trigger condition comprises detecting, at least partially in dependence in information from the proximity sensor (124A), when the portable electronic device is mounted to the cradle.

**5.** The method of any one of claims 1 to 4 wherein detecting a predetermined trigger condition comprises detecting when a predetermined user input is made to the portable electronic device (100).

**6.** The method of any one of claims 1 to 5 wherein the display screen (118) comprises a touch-sensitive display screen (114), wherein enabling a user input interface accessible on the front face of the device comprises displaying a user selectable input element on the touch-sensitive display screen providing the input function associated with the side input button (120E, 120F, 120G).

**7.** The method of claim 6 wherein the input function associated with the side input button (120E, 120F, 120G) is a volume control function, and the user selectable input element comprises a virtual slider bar (402) operative to control an output volume of the portable electronic device (100).

**8.** The method of claim 6 wherein the input function associated with the side input button (120E, 120F, 120G) is a user programmable function input, and the user selectable input element comprises a soft button.

**9.** The method of any one of claims 6 to 8 comprising, upon detecting the predetermined trigger condition, displaying on the touch-sensitive display screen (114) a user selectable button for toggling between a portrait display orientation and a landscape display orientation on the display screen (118).

**10.** The method of any one of claims 1 to 5 wherein the portable electronic device (100) comprises a plurality of physical input buttons located on the front face thereof, wherein enabling a user input interface accessible on the front face of the device comprises temporarily mapping the input function of the side input button (120E, 120F, 120G) to one or more of the input buttons located on the front face.

**11.** A computer readable medium comprising computer readable code for execution by a processor (102) of a portable electronic device (100), the computer readable code enabling the portable electronic device (100) to perform the method of any one of claims 1 to 10.

**12.** A portable electronic device comprising:
a housing (200) having a display screen (118) on a front face (202) thereof, and a side edge (204, 206) substantially orthogonal to the front face (202);
a side input button (120E, 120F, 120G) located on the side edge and having an associated input function;
an orientation sensor; and
a processor (102) operatively coupled to the display screen, the orientation sensor and the side input button, the processor being configured for performing the method of any one of claims 1 to 10.
